# FASCICULE DE BREVET EUROPEEN

(11) **EP 1 412 655 B1**
(45) Date de publication et mention de la délivrance du brevet: **03.05.2006**
(21) Numéro de dépôt: 02748964.0
(22) Date de dépôt: 19.06.2002
(51) Int. Cl.: F16D 65/16, F16D 65/56

(54) **FREIN A DISQUE POUR VEHICULE A COMPENSATION D'USURE DES GARNITURES**
SCHEIBENBREMSE FÜR KRATFAHRZEUGE MIT NACHSTELLVORRICHTUNG DES BELAGVERSCHLEISSES
VEHICLE DISC BRAKE WITH LINING WEAR COMPENSATION

(30) Priorité: 21.06.2001 FR 0108308
(43) Date de publication de la demande: 28.04.2004
(73) Titulaire: ROBERT BOSCH GMBH, 70442 Stuttgart (DE)
(72) Inventeur: BOISSEAU, Jean-Pierre, F-75014 Paris (FR); SERANE, Yohann, - (FR); CUBIZOLLES, Cyril, - (FR)
(74) Mandataire: Hurwic, Aleksander Wiktor
(86) Numéro de dépôt international: PCT/FR2002/002119
(87) Numéro de publication internationale: WO 2003/004898

(56) Documents cités:
- FR-A- 2 135 982
- FR-A- 2 638 214
- US-A- 5 607 033

## Description

L'invention concerne les freins à disque pour véhicule automobile.

On connaît des freins à disque comprenant un étrier, deux plaquettes de freins, un équipage coulissant et un piston. La commande d'actionnement du frein provoque le coulissement de l'équipage et par suite celui du piston qui sollicite une des plaquettes en appui sur une face du disque, lui-même en appui sur l'autre plaquette par son autre face. Le mouvement du piston, permettant d'éloigner ou de rapprocher les plaquettes du disque, définit une course nominale du piston. Il est connu par ailleurs que l'actionnement répété du frein provoque l'usure progressive des plaquettes. Cette usure tend a priori à augmenter la course nominale, ce qu'il faut éviter, notamment pour que le freinage suive de près la commande.

Pour palier cet inconvénient, on a proposé au sein de l'équipage un dispositif de liaison visant à compenser l'usure des plaquettes. Ce dispositif comporte une vis et une écrou recevant la vis pour former un poussoir dé longueur variable. Ce dispositif est agencé de sorte que, en cas d'usure de l'une des plaquettes, l'actionnement du frein fait tourner la vis par rapport à l'écrou pour accroître la longueur du poussoir et compenser ainsi l'usure. Le document FR-A-2135982 présente un tel dispositif ainsi qu'un embrayage conique entre le poussoir et le piston. Dans le document US-A-5607993, la compensation d'usure se produit cette fois par effet de coin. Ces moyens de liaison constituent l'équivalent pour le coulissement du principe de la roue libre qui est libre à rotation dans un sens mais pas en sens contraire.

Un but de l'invention est de fournir des moyens de compensation d'usure d'un type différent.

A cet effet, on prévoit selon l'invention un frein à disque selon l'objet de la revendication 1.

Le frein selon l'invention pourra en outre présenter au moins l'une quelconque des caractéristiques suivantes :
- les moyens de liaison comprennent au moins une face de contact reliée à l'actionneur, au moins une face de contact relié au piston, et au moins deux éléments d'appui aptes à prendre appui chacun sur la face de contact reliée à l'actionneur et la face de contact reliée au piston ;
- le frein comprend des moyens de rappel des éléments d'appui dans le premier sens ;
- le frein comprend un support solidaire à coulissement de l'un parmi le piston et l'actionneur, de préférence le piston, et sur lequel prennent appui les moyens de rappel ;
- les faces de contact reliées à l'actionneur et au piston sont planes ;
- au moins une des faces de contact reliées à l'actionneur et au piston présente une gorge de réception de l'un des éléments d'appui ;
- au moins une des faces est inclinée par rapport à la direction de coulissement du piston, dans le premier sens, et au moins une autre des faces est inclinée dans le deuxième sens ;
- les éléments d'appui comprennent des billes ;
- les éléments d'appui comprennent des galets ;
- les éléments d'appui comprennent des patins dont toutes les faces sont planes ;
- les éléments d'appui comprennent des patins dont certaines faces ont une forme en portion de cône ;
- le frein comprend un organe de rappel du piston par rapport à l'étrier dans le deuxième sens, le piston étant apte à glisser sur l'organe de rappel au-delà d'une course de valeur prédéterminée du piston par rapport à l'étrier ;
- le frein comprend en outre un organe de déverrouillage apte à déplacer les éléments d'appui indépendamment du piston dans le deuxième sens ;
- l'organe de déverrouillage s'étend dans le piston en étant interposé axialement entre l'actionneur et les garnitures par référence à la direction de coulissement ;
- l'organe de déverrouillage délimite une enceinte et assure une étanchéité de l'enceinte à l'égard de l'air extérieur ;
- l'organe de déverrouillage comprend une lèvre d'étanchéité ;
- il comporte un coulisseau portant la ou chaque face de contact reliée à l'actionneur et mobile à coulissement par rapport à l'actionneur sur une course plus courte qu'une course nominale de l'actionneur par rapport à l'étrier, de sorte que l'actionneur est apte à entraîner le coulisseau au cours de sa course nominale;
- le frein comprend une enceinte de fluide telle qu'une pression du fluide est apte à déplacer le piston en vue de freinage, l'actionneur délimitant l'enceinte de sorte que le piston se trouve à distance de l'enceinte ;
- le frein est du type à frein de parc intégré ; et
- le frein est du type coulissant.

D'autres caractéristiques et avantages de l'invention apparaîtront encore dans la description suivante d'un mode préféré de réalisation et de variantes donnés à titre d'exemples non limitatifs. Aux dessins annexés :
- la figure 1 est une vue en coupe axiale d'un frein selon un mode préféré de réalisation de l'invention ;
- la figure 2 est une vue schématique partielle en coupe axiale du frein de la figure 1 ;
- les figures 3 et 4 sont des vues analogues à la figure 2 illustrant la transmission des efforts respectivement dans le cas d'un actionnement mécanique et d'un actionnement hydraulique du frein, la transmission des efforts étant illustrée à chaque fois dans la demi-vue inférieure tandis que la demi-vue supérieure montre le frein au repos ;
- les figures 5 à 7 sont trois demi-vues en coupe axiale analogues à la figure 2 illustrant trois états du frein au repos en fonction du degré d'usure des plaquettes, les plaquettes étant respectivement illustrées à l'état neuf, avec une usure modérée, et enfin avec une usure importante ;
- les figures 8 à 10 sont trois demi-vues en coupe axiales analogues à la figure 2 illustrant le rappel élastique du piston par le joint et le rattrapage du jeu consécutif à l'usure des plaquettes, les figures illustrant respectivement le frein avant une action de freinage, durant une action de freinage mécanique, puis à l'issue de cette action ;
- la figure 11 est une vue simplifiée en coupe axiale du compensateur du frein de la figure 2 montrant la configuration des éléments à effets de coin ;
- la figure 12 est une vue en section suivant le plan XII-XII des éléments de la figure 11;
- les figures 13 à 18 sont des vues analogues aux figures 11 et 12 illustrant trois autres modes de réalisation du compensateur; et
- la figure 19 est une vue analogue à la figure 2 illustrant une variante de réalisation du frein.

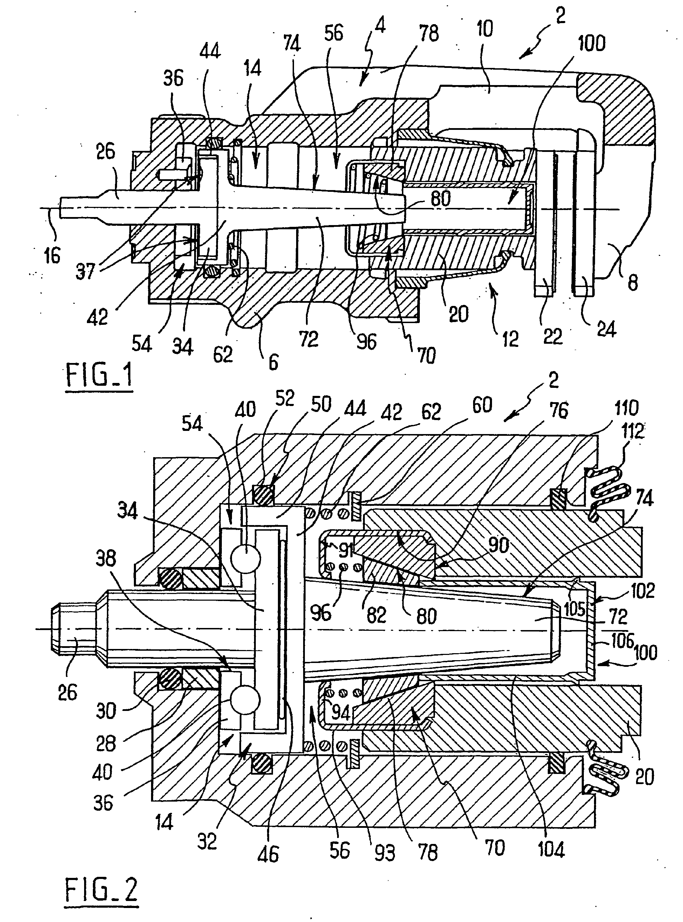

Un mode préféré de réalisation du frein selon l'invention a été illustré en détail à la figure 1 et plus schématiquement à la figure 2. Le frein 2 comporte un étrier 4 comprenant de façon connue en soi un corps principal 6, un nez 8 s'étendant en regard du corps et une voûte 10 reliant le nez au corps. Le nez, la voûte et le corps donnent à la moitié de l'étrier une forme générale en U ménageant un espace libre 12 en regard de la voûte entre le nez et le corps. Dans le présent mode de réalisation, le frein à disque pour véhicule est à frein de parc intégré et peut donc être commandé d'une part au moyen du circuit hydraulique du véhicule à partir de la pédale de frein et d'autre part mécaniquement au moyen de la manette de frein de parc.

Le corps 6 présente un évidement intérieur 14 de forme générale cylindrique d'axe 16. L'évidemment cylindrique 14 présente en regard du nez 8 une extrémité axiale distale débouchant dans l'espace 12.

Le frein comporte un piston 20 de forme générale cylindrique reçu dans l'évidemment cylindrique 14 en étant mobile à coulissement dans celui-ci suivant l'axe 16. Le piston 20 présente une extrémité axiale distale portant une garniture de frein, en l'espèce une plaquette 22, essentiellement de forme plane perpendiculaire à l'axe 16. Le nez 8 porte une autre garniture 24 analogue à la garniture 22 s'étendant parallèlement à celle-ci et en regard de celle-ci. Comme il est bien connu, ces deux plaquettes sont destinées à venir en appui contre deux faces respectives d'un même disque (non illustré) se trouvant entre elles de façon à provoquer le freinage par la friction des plaquettes sur le disque.

Le frein 2 comporte un arbre d'entrée 26 d'un type connu en soi, d'axe 16, et relié de façon non représentée à la manette de frein de parc du véhicule afin d'être mis en rotation autour de son axe 16 sous l'effet de l'actionnement de cette manette.

Le frein comporte un transformateur de mouvement 32 apte à transformer le mouvement rotatif de l'arbre d'entrée 26 en un mouvement de coulissement, et d'autre part un dispositif de liaison 70, compensateur d'usure, apte à transmettre ce mouvement de coulissement au piston. Par référence au sens de transmission des forces dans la chaîne cinématique durant une action de freinage, le transformateur s'étant en amont par rapport aux moyens de liaison compensateurs d'usure. Nous allons tout d'abord décrire le transformateur 32 avant d'envisager les moyens de liaison 70.

L'arbre d'entrée 26 est reçu dans un palier du corps 6 de l'étrier avec interposition de moyens de roulement 28 d'un type classique et, en amont de ceux-ci, d'un joint d'étanchéité classique 30. Le convertisseur de mouvement 32 comporte un plateau 34 que nous appellerons ici, pour plus de clarté, plateau de glissement. Ce plateau 34 a une forme circulaire plane d'axe 16 et est fixé rigidement par une de ses faces à l'extrémité distale de l'arbre 26. Le convertisseur comporte également un autre plateau 36 de forme analogue au plateau 34 et que nous appellerons ici plateau de réaction. Le plateau 36 est coaxial au plateau de glissement 34. Il présente un orifice central 38 traversé par l'arbre 26. Le plateau de réaction 36 est fixé rigidement au corps 6 à l'extrémité axiale proximale du logement cylindrique 14.

Les plateaux de glissement 34 et de réaction 36 ont donc des faces s'étendant en regard l'une de l'autre et parallèlement l'une à l'autre. Chacun de ces deux plateaux présente des gorges 37 ménagées dans ces faces, chaque gorge ayant une forme générale en arc de cercle centrée sur l'axe 16. De plus, chaque gorge présente une profondeur variable le long de la gorge. Les gorges sont agencées par paires de gorges en regard. Le convertisseur 32 comporte des billes 40 reçues dans les paires de gorges respectives et ainsi interposées entre les deux plateaux. Les billes et donc les paires de gorges sont par exemple au nombre de trois. Les deux plateaux avec les billes sont configurés de façon connue en soi pour former un dispositif de type BIR (abréviation du terme anglais «ball in ramp »). Ce type de dispositif tel que décrit par exemple dans le document EP-0 633 987 permet dans l'exemple de réalisation ici décrit de faire en sorte que la rotation de l'arbre 26 autour de son axe entraîne de surcroît une translation de cet arbre suivant l'axe 16 en direction du piston 20 de sorte que l'arbre suit une trajectoire proche d'une hélicoïde. L'agencement des deux plateaux dans les convertisseurs de type BIR de l'art antérieur avait en général pour fonction de transformer le mouvement de rotation pure de l'un des plateaux en un mouvement de coulissement pur de l'autre plateau. Compte tenu de l'agencement des disques dans le présent exemple et notamment du fait que le disque de réaction 36 est rigidement fixé à l'étrier, la transformation du mouvement est cette fois différente. Toutefois, l'agencement des gorges et des billes ne varie pas fondamentalement par rapport aux agencements connus.

Le convertisseur comporte en outre un actionneur 42 comprenant un plateau d'axe 16, de forme analogue au plateau de glissement 34 et s'étendant parallèlement et en regard de celui-ci. L'actionneur 42 comporte également une paroi circonférentielle 44 s'étendant à partir du bord du plateau 42 en direction de l'extrémité proximale du cylindre, c'est-à-dire en direction de l'arbre 26. La paroi 44 et le plateau 42 définissent ainsi un logement ouvert recevant coaxialement à l'actionneur le plateau de glissement 34. Le convertisseur 32 comporte une garniture de glissement 46 interposée entre le plateau de glissement 34 et le plateau de l'actionneur 42 et en contact direct par ses faces avec ceux-ci.

L'actionneur 42 est monté mobile à coulissement par rapport au corps 6 dans l'évidemment 14 suivant l'axe 16 par appui de la paroi 44 contre la paroi de l'évidemment cylindrique. Il découle de cet agencement de l'actionneur 42 par rapport au plateau de glissement 34 que le mouvement hélicoïdal de ce dernier entraîne l'actionneur 42 suivant un mouvement de coulissement pur parallèle à l'axe 16 en direction du piston. Pour éviter toute rotation de l'actionneur autour de l'axe, on pourra prévoir de bloquer cette rotation au moyen d'une vis ou d'un élément analogue faisant saillie à partir de l'actionneur dans une gorge du corps 6 parallèle à l'axe 16 ou inversement faisant saillie à partir du corps 6 dans une gorge de l'actionneur. Dans ces conditions, le mouvement hélicoïdal de l'arbre d'entrée 26 provoque le coulissement de l'actionneur 42 suivant l'axe 16.

Le corps 6 présente une gorge 50 ménagée dans la paroi cylindrique de l'évidement 14 en regard de la paroi 44 de l'actionneur de façon à recevoir un joint 52 assurant une étanchéité à l'égard du fluide de freinage, en l'espèce un liquide, entre la paroi 44 d'une part et le corps 6 d'autre part. Une telle étanchéité est également assurée par le joint 30 contigu à l'arbre d'entrée 26. Compte tenu de la disposition de ces pièces et en particulier de l'agencement des deux joints 30 et 52, le frein 2 comprend une chambre 54 remplie de liquide de freinage sous pression limitée vers l'aval c'est-à-dire en direction du piston par le plateau de l'actionneur 42. Cette chambre 54 est par ailleurs limitée par la partie proximale du corps 6 s'étendant jusqu'au joint 30. Les éléments baignant dans le liquide de freinage sont donc le palier 28, le disque de réaction 36, les billes 40, le plateau de glissement 34, la garniture 46 et, par certaines seulement de ses faces et facettes, l'actionneur 42. On voit donc que le piston 20 se trouve intégralement en dehors de cette chambre 54 et à distance de celle-ci. Le frein comporte en l'espèce une deuxième chambre 56 que nous appellerons « chambre sèche » essentiellement remplie d'air à la pression atmosphérique et dans laquelle baigne notamment le piston 20. Cette chambre est délimitée du coté de l'arbre 26 par la face distale de l'actionneur 42.

La chambre de liquide 54 est alimentée en liquide de freinage et mise sous pression à partir d'un maître-cylindre de façon connue en soi et au moyen de conduits et d'orifices classiques qui n'ont pas été représentés. Compte-tenu de cette configuration des chambres 54 et 56, l'actionnement de la pédale de frein du véhicule par le conducteur entraîne une augmentation de pression dans la chambre 54 qui a pour effet de solliciter l'actionneur 42 à partir de sa face proximale en direction du piston. Cette sollicitation entraîne le coulissement de l'actionneur 42 suivant l'axe 16. L'arbre 26, le plateau de glissement 34 et les billes 40 ainsi que naturellement le plateau de réaction 36 restent immobiles durant ces déplacements.

Au niveau de la chambre sèche 56, une gorge est ménagée dans la face cylindrique de l'évidemment 14 pour recevoir une rondelle 60 s'étendant en saillie radiale par référence à l'axe 16 dans l'évidemment 14 de façon à servir d'appui à un ressort de rappel prenant appui par ailleurs et en sens opposé contre la face distale de l'actionneur 42 s'étendant dans la chambre sèche. Ce ressort 62 constitue un moyen de rappel permettant de ramener l'actionneur 42 en direction de l'arbre 26 lorsque cesse la commande de freinage hydraulique.

Nous allons maintenant décrire les moyens de liaison et de compensation d'usure 70 interposés entre l'actionneur 42 et le piston 20 de façon à transmettre le mouvement de l'actionneur au piston.

Le compensateur 70 comprend une pièce d'appui mâle 72 d'axe 16 allongée suivant cet axe et fixée rigidement par son extrémité proximale à l'actionneur 42. La pièce d'appui présente une face circonférentielle 74 qui a en l'espèce une forme tronconique, la section du cône allant en diminuant en direction des plaquettes.

Le piston 20 présente une extrémité proximale dans laquelle est ménagée un épaulement 76. Le compensateur 70 comporte une pièce d'appui femelle 78 logée dans l'épaulement 76. En particulier, une face distale de la pièce femelle 78 de forme plane perpendiculaire à l'axe 16 prend appui sur une face correspondante de l'épaulement. La pièce femelle 78 présente par ailleurs une face périphérique essentiellement cylindrique. Elle présente enfin une face interne 80 qui est en l'espèce tronconique, la section du cône ici encore allant en diminuant en direction des plaquettes. La pièce femelle 78, d'axe 16, est ouverte à ses deux extrémités axiales.

Le compensateur 70 comporte des cales 82 qui sont au moins au nombre de deux et en l'espèce au nombre de quatre. Les cales 82 sont identiques entre elles. En référence aux figures 2, 11 et 12, chaque cale 82 présente deux faces externe et interne 84 et 86 chacune en forme de quartier de cône. Nous entendons par là que chaque face est définie par une surface de cône mais que cette surface est interrompue sans pouvoir s'étendre tout autour de l'axe du cône. Les deux faces 84 et 86 ont pour axe l'axe 16. Chaque cale 82 présente deux faces planes latérales 88 de forme plane et s'étendant dans un plan radial à l'axe 16. Elles présentent également deux faces d'extrémités distale et proximale 90 également planes et s'étendant perpendiculairement à l'axe 16. Les quatre faces 88, 90 et 92 joignent chacune les deux faces 84 et 86 l'une à l'autre.

La pièce d'appui mâle 72 s'étend dans l'orifice de la pièce d'appui femelle 78, coaxialement à celle-ci. Les cales 82 sont interposées radialement entre les deux pièces d'appui mâle et femelle en étant par ailleurs réparties autour de la circonférence de la pièce mâle, les faces latérales 88 des cales étant en regard les unes des autres.

La pièce mâle 72 a une longueur suivant l'axe 16 beaucoup plus importante que la longueur de la pièce femelle 78 et que la longueur des cales 82. La longueur de la pièce mâle est ici environ quatre fois supérieure à la longueur des cales. Elle pourra plus généralement être comprise entre 2 fois cette longueur et huit fois cette longueur.

Les cales sont destinées chacune à être simultanément en appui contre la face 80 de la pièce femelle et la face 74 de la pièce mâle. Comme on le verra dans la suite, l'appui des cales sur la pièce mâle peut s'effectuer à proximité de l'actionneur 42 comme à proximité de l'extrémité libre distale de la pièce mâle en fonction de l'état d'usure des plaquettes. Or, compte-tenu de sa forme, le rayon de la pièce mâle va en diminuant en direction de l'extrémité distale. En l'espèce, on choisit de donner à la face interne 86 des cales un rayon sensiblement identique au rayon de la face 74 de la pièce mâle 72 à mi-longueur de celle-ci. De la sorte, lorsque les cales 82 sont en appui sur une partie médiane de la pièce mâle, le contact entre la face 74 et la face 86 est sensiblement surfacique. En revanche, lorsque la cale 82 est en appui sur la pièce mâle sur la moitié de la face 74 la plus proche de l'actionneur 42, le contact se produit essentiellement suivant les deux arrêtes de la cale 82 définies par les jonctions des faces latérales 88 avec la face interne 86.Si a contrario on donnait à la face interne 86 des cales un rayon égal au plus grand rayon de la pièce mâle un contact linéique se produirait alors suivant le plan médian de la face 86 pour toutes les autres positions des cales..

Pour des raisons analogues, on donne à la face externe 84 de chaque cale une forme telle que le contact entre cette face 84 et la face interne 80 de la pièce femelle est globalement surfacique lorsque la cale s'étend en regard de la partie médiane de la pièce femelle. Ainsi, lorsque la cale sera amenée progressivement à se déplacer vers la partie la plus distale de cette pièce, le contact se transformera progressivement en un contact linéique suivant les deux arrêtes définies par les jonctions des faces 88 avec la face 84 et ce en raison ici encore de la diminution du rayon de la face de contact de la pièce femelle.

Alternativement, on pourrait choisir de donner à la face interne 86 des cales au rayon sensiblement identique au plus petit rayon de la face 74 de la pièce mâle 72.

Le compensateur 70 comprend une cage 91 comportant une paroi cylindrique circonférentielle 93 interposée entre la face cylindrique externe de la pièce femelle 78 et la face en regard de l'épaulement 76. Cette paroi 93 se prolonge en direction radiale à son bord distal par une pliure. La cage 91 comporte par ailleurs une paroi proximale 94 essentiellement plane et perpendiculaire à l'axe 16 s'étendant radialement à partir du bord proximal de la paroi 93.

Le compensateur 70 comprend un ressort prenant appui d'une part en direction proximale sur une face de la paroi 94 et en direction distale d'autre part sur une face proximale des cales 82. De la sorte, les cales 82 sont en permanence sollicitées suivant l'axe 16 en direction distale c'est-à-dire en direction des plaquettes.

Le piston 20 présente en son centre un évidemment cylindrique 100 débouchant à son extrémité axiale proximale de sorte que la pièce mâle 72 peut pénétrer dans l'évidemment 100, obturé à son extrémité axiale distale par la plaquette 22. Le frein comprend une pièce de déverrouillage 102 logée dans cet évidement. Cette pièce comprend une paroi cylindrique 104 et une paroi distale plane 106 perpendiculaire à l'axe 16 et s'étendant au bord distal de la paroi 104. La pièce de déverrouillage est dimensionnée de sorte que le bord d'extrémité axiale proximale libre de la pièce peut venir en contact avec l'extrémité distale des cales 82 et prendre appui sur celles-ci, la pièce mâle 72 étant alors reçue en partie dans la pièce de déverrouillage. Celle-ci peut ainsi solliciter les cales suivant l'axe 16 en direction de l'arbre 26. Pour permettre d'actionner la pièce de déverrouillage à cette fin, on pourra prévoir un orifice débouchant radialement à l'intérieur du piston depuis l'extérieur de celui-ci au voisinage de son extrémité distale.

La pièce de déverrouillage 102 porte sur sa paroi cylindrique 104 une lèvre 105 s'étendant en saillie de cette paroi radialement par référence à l'axe 16 et en contact avec la face interne formant l'évidement cylindrique central du piston. De la sorte, la pièce de déverrouillage assure une certaine étanchéité entre la chambre 54 et l'air atmosphérique extérieur, notamment à l'égard des poussières.

Le frein comprend un joint 110 de forme circulaire à section carrée logé dans une gorge du corps 6 de façon à venir en appui contre la face externe cylindrique du piston. Le flan proximal de cette gorge est perpendiculaire à l'axe 16 tandis que le flan distal est courbe pour autoriser une déformation du joint en direction des plaquettes sous l'effet du mouvement du piston. Compte tenu du fait que ce joint n'est pas en contact avec le liquide de la chambre 54, il n'a aucune fonction d'étanchéité à l'égard de ce liquide et a principalement une fonction de rappel élastique du piston par rapport à l'étrier comme on le verra dans la suite. Il a cependant une fonction d'étanchéité à l'égard de la chambre sèche 56 et l'air extérieur.

Le frein comporte également une lèvre 112 ayant ses bords respectifs reçus dans un épaulement de l'étrier et dans une gorge du piston de façon à isoler de la poussière et des salissures la chambre 56 quelle que soit la position du piston.

On va maintenant décrire le fonctionnement de ce frein ainsi que ses propriétés.

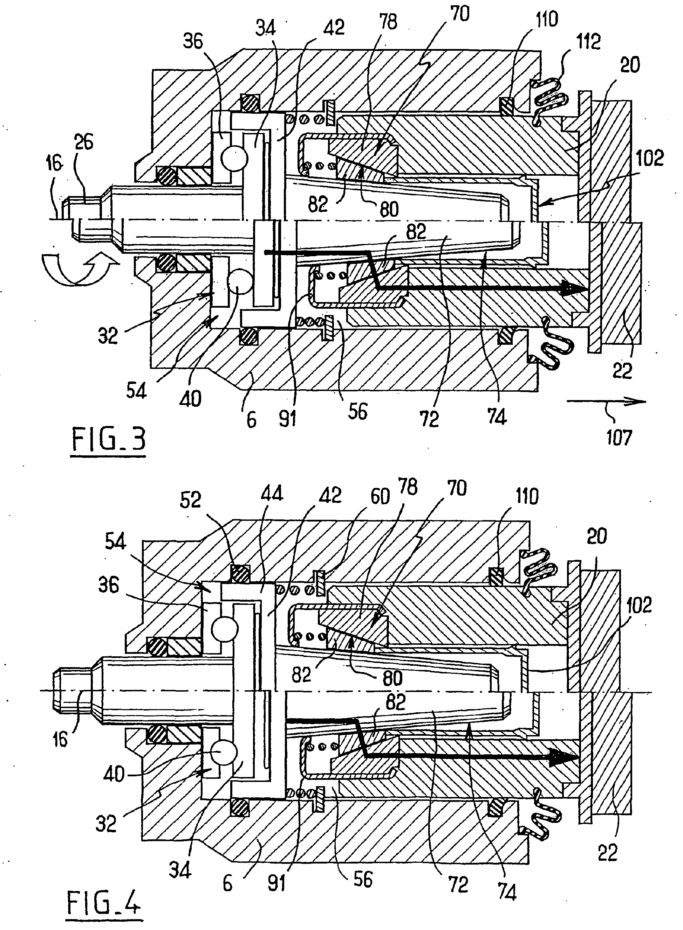

Les figures 3 et 4 illustrent la transmission des efforts lors du freinage.

La figure 3 montre le cas où une action de freinage est commandée au moyen de la manette de frein de parc. L'action de rotation générée par cette manette au niveau de l'arbre 26 est transformée par le convertisseur 32 en un mouvement hélicoïdal de cet arbre qui provoque lui-même le coulissement de l'actionneur 42 suivant l'axe 16 en direction des plaquettes. Du fait de l'appui des cales 82 à la fois sur la pièce mâle et sur la pièce femelle et de l'inclinaison de leurs faces de contact, cet effort se transmet de la pièce mâle 72 aux cales 82 puis à la pièce femelle 78 et enfin au piston 20 et à la plaquette 22 fixée à celui-ci.

La figure 4 illustre le cas d'une commande de freinage par le circuit hydraulique du véhicule à partir de la pédale de frein. Dans cette situation, l'augmentation de la pression du liquide dans la chambre 54 entraîne le coulissement de l'actionneur 42 en direction des plaquettes, ce qui produit, de la même façon qu'à la figure 3, une transmission des efforts depuis l'actionneur 42 jusqu'à la plaquette 22 à travers la pièce mâle, les cales, la pièce femelle et le piston.

On remarquera que ces déplacements de l'actionneur, de la pièce mâle, des cales, de la pièce femelle et du piston par rapport à l'étrier dans le premier sens 107 se produisent sans aucun mouvement relatif de ces pièces entre elles. De plus, il n'existe à ce moment aucun jeu entre ces pièces qui restent immobiles les unes par rapport aux autres et se déplacent d'un seul bloc par rapport à l'étrier.

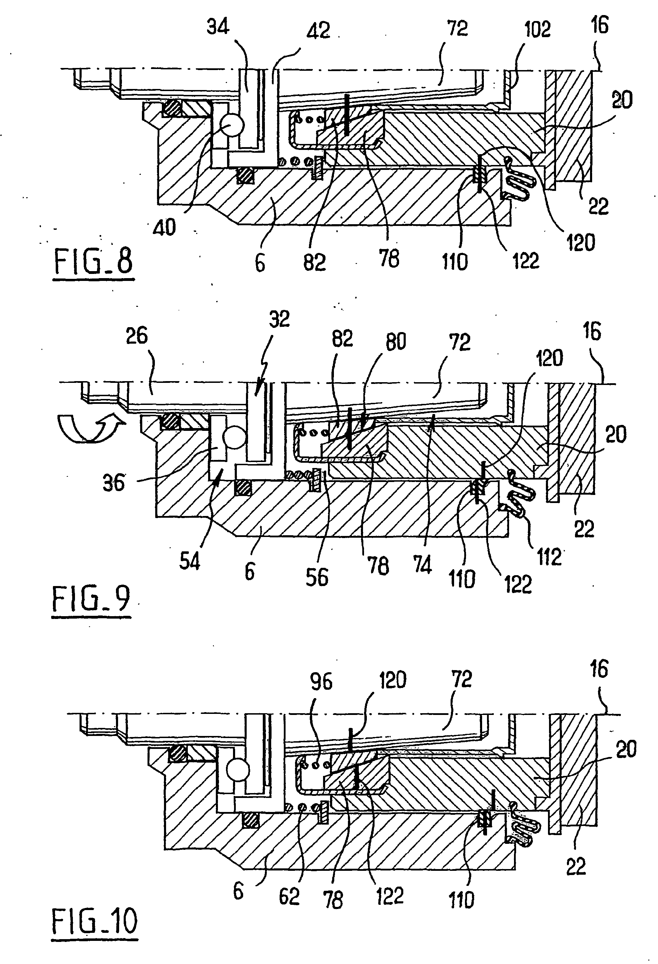

La figure 8 illustre le frein au repos tandis que la figure 9 le montre dans une situation identique à celle de la figure 3, c'est-à-dire lorsqu'une commande de freinage mécanique est reçue qui entraîne à coulissement par rapport à l'étrier l'ensemble des pièces situées entre l'actionneur 42 et la plaquette 22. Au cours de celui-ci, le déplacement du piston par rapport à l'étrier provoque la déformation du joint 110. Lors du freinage, le frottement des plaquettes 22 et 24 sur le disque engendre une légère usure de celle-ci. Le joint 110 est configuré de sorte que le piston au cours de la course de freinage non seulement déforme le joint mais en outre glisse légèrement par rapport à celui-ci en direction du disque sur une longueur correspondant à la somme de la diminution d'épaisseur des plaquettes au cours de cette action. Les marques 120 et 122 sur la figure 9 montrent le déplacement du piston par rapport au joint, par comparaison avec leur alignement sur la figure 8.

Lorsque la commande de freinage s'interrompt, le ressort 62 rappelle l'actionneur 42, l'arbre d'entrée et la pièce mâle 72 en direction opposée au disque. Le piston 20 quant à lui est rappelé dans la même direction d'une part sous l'effet de la réaction provoquée sur le disque au contact des plaquettes et d'autre part sous l'effet du rappel élastique produit par le joint 110 qui reprend sa forme d'origine. Toutefois, en raison du glissement qui est intervenu entre le piston et ce joint, la position d'arrivée du piston est légèrement décalée par rapport à sa position de départ, le piston se trouvant maintenant légèrement plus près du nez 8. Il s'ensuit une différence de position entre la pièce mâle 72 et la pièce femelle 78. Le jeu ainsi crée est immédiatement comblé par les cales 82 qui sous l'effet du ressort 96 viennent à nouveau se placer en appui simultané contre la pièce mâle et la pièce femelle. La figure 10 illustre cette situation dans laquelle le piston a pris une position de repos légèrement décalée par rapport à sa position d'origine comme l'indiquent les marques 120 et 122 qui étaient initialement en coïncidence sur la figure 8. Les cales occupent une position intermédiaire entre ces deux marques.

Le frein est donc à nouveau dans une situation telle qu'il n'existe aucun jeu de coulissement entre les pièces s'étendant entre l'actionneur et la plaquette 22. Par conséquent, au cours de la prochaine action de freinage, ces pièces pourront transmettre les sollicitations en se déplaçant à nouveau d'un seul bloc par rapport à l'étrier 4 comme on l'a vu plus haut.

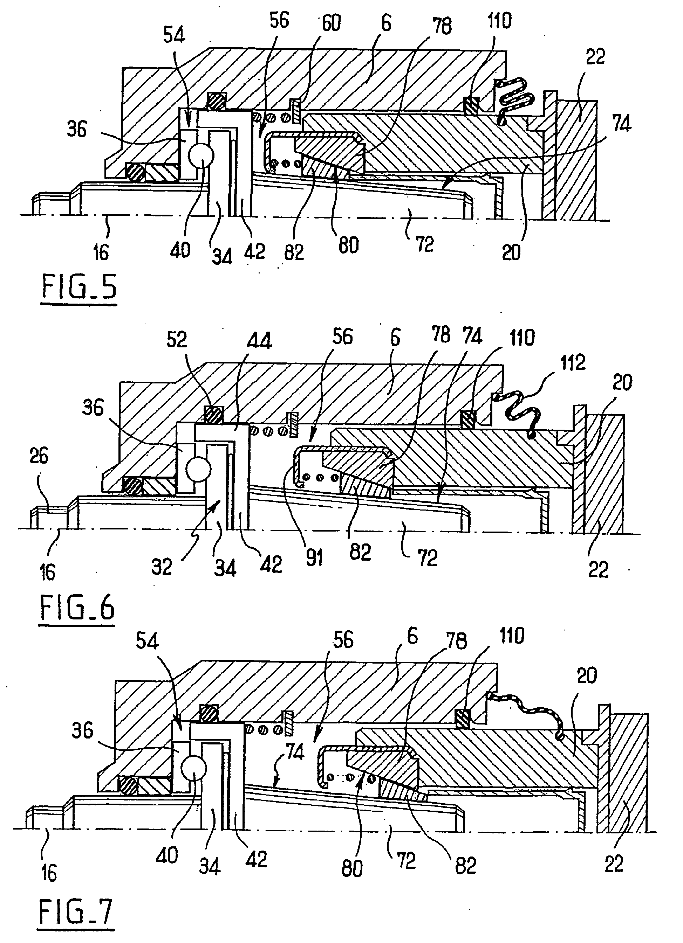

Il découle de ce fonctionnement que les cales 82 sont conduites à se déplacer progressivement en direction du nez de l'étrier au fur et à mesure que les plaquettes 22 et 24 s'usent comme l'illustrent les figures 5 à 7. Plus précisément, il se produit un déplacement des cales 82 le long de la pièce mâle 72 ainsi que, dans une moindre mesure, un déplacement des cales le long de la pièce femelle 78, ce dernier étant plus modéré compte tenu de l'agencement des pièces dans ce mode de réalisation. On voit donc que le dispositif 70 remplit sa fonction de compensation d'usure des plaquettes.

Par ailleurs, le joint 110 permet de rappeler le piston sur une course constante quel que soit le degré d'usure des plaquettes de façon à préserver la course de fonctionnement du piston en dépit de la compensation d'usure opérée par le compensateur. 70.

Le compensateur 70 est susceptible d'interdire par effet de coin de reculer manuellement le piston vers l'arbre 26 par rapport à l'étrier en vue d'intervenir manuellement sur le frein lors d'une opération de maintenance. Pour permettre une intervention sur le frein dans cette situation, il est possible d'actionner la pièce de déverrouillage 102 de façon qu'elle prenne appui sur l'extrémité distale des cales pour les solliciter en direction de l'arbre 26. Cet appui intervient dans le sens opposé à l'effet de coin à l'encontre du ressort 96 et conduit donc à faire reculer les cales, ce qui permet ensuite de déplacer manuellement le piston.

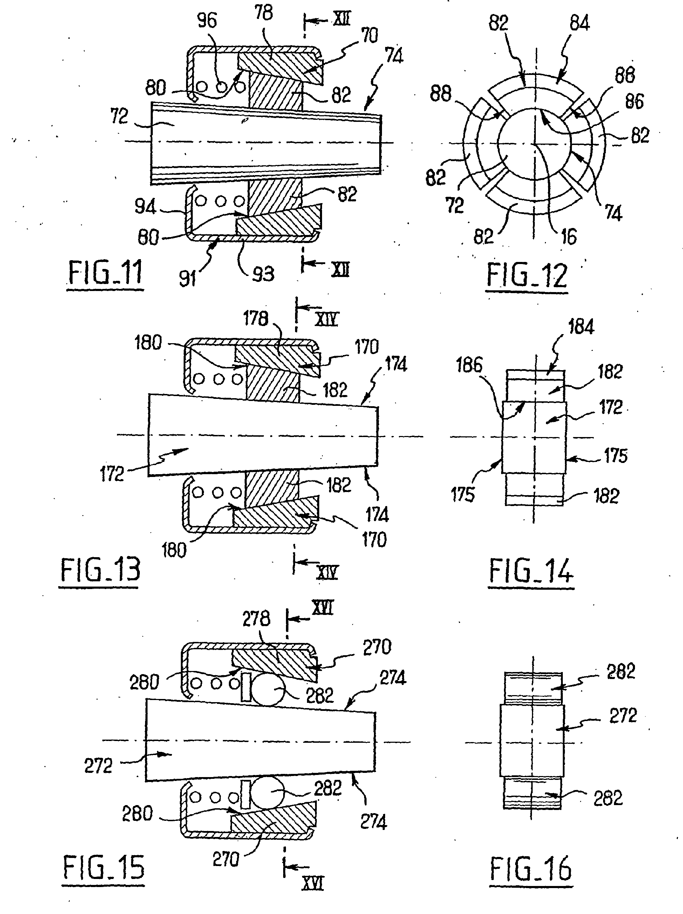

On a illustré aux figures 13 à 18, trois autres modes de réalisation des cales et des pièces mâle et femelle. Dans la description de ces modes de réalisation, les éléments homologues à ceux du premier mode portent des références augmentées de 100, 200 ou 300.

Dans le mode de réalisation des figures 13 et 14, les cales 182 ont une forme de patin dont toutes les faces sont planes, leurs faces de contact 184 et 186 étant planes et inclinées l'une par rapport à l'autre pour produire l'effet de coin. Le contact entre les cales 182 et les pièces mâle 172 et femelle178 est ici, à chaque fois et quel que soit le degré d'usure des plaquettes, un contact surfacique. Les faces latérales 188 des cales sont planes et orientées perpendiculairement par rapport à l'axe 16. Les faces avant et arrière sont planes et perpendiculaires à l'axe 16.

La pièce mâle 172 présente ici deux faces planes 174 s'étendant en opposition l'une à l'autre de part et d'autre de l'axe 16. Ces deux faces sont inclinées légèrement vers le nez de l'étrier par rapport à l'axe 16 et l'une par rapport à l'autre de sorte que la hauteur de la pièce mâle 172 va à nouveau en diminuant en direction de celui-ci. La pièce mâle présente par ailleurs deux faces latérales 175 planes et parallèles entre elles, les quatre faces 174 et 175 donnant à la pièce mâle un profil rectangulaire.

La pièce femelle 170 est ici séparée en deux éléments distincts s'étendant respectivement en regard des faces 174. Chaque élément 170 présente une face plane 180 inclinée par rapport à l'axe 16 dans le même sens que la face 174 mais cette inclinaison est plus forte. L'inclinaison des deux faces 184, 186 de chaque cale correspond rigoureusement à l'inclinaison des faces respectives avec lesquelles elles sont destinées à venir en contact. Les cales sont ici au nombre de deux, les faces latérales 175 de la pièce mâle étant inutilisées. Toutefois, on pourrait disposer les faces 175 elles aussi dans une configuration inclinée et leurs associer d'autres cales ainsi que des éléments de pièces femelles afin que l'effet de coin intervienne également en regard de ces faces. Le fonctionnement du compensateur d'usure 170 est identique à celui du dispositif 70 décrit en référence à la figure 2.

Les figures 15 et 16 présentent un autre mode de réalisation du compensateur 270. Les pièces mâle 272 et femelles 270 sont configurées de la même façon que dans le mode de réalisation des figures 13 et 14. Les cales 282 sont ici formées par des galets cylindriques. Le contact entre les galets et les pièces mâle et femelles est ici, à chaque fois, un contact linéique orienté perpendiculairement à l'axe 16. Alors que dans les deux précédents modes le mouvement des cales par rapport aux pièces mâle et femelles était un mouvement de glissement pur, le mouvement des galets dans le présent mode pourra faire intervenir en plus de la composante de glissement une composante de roulement. Les autres aspects du fonctionnement du compensateur sont identiques à ceux du précédent mode. Ici encore, les cales 282 sont au nombre de deux mais on pourrait prévoir un nombre supérieur de cales. Pour faciliter l'appui du ressort 96 sur les cales, une pièce intermédiaire d'un seul bloc est prévue.

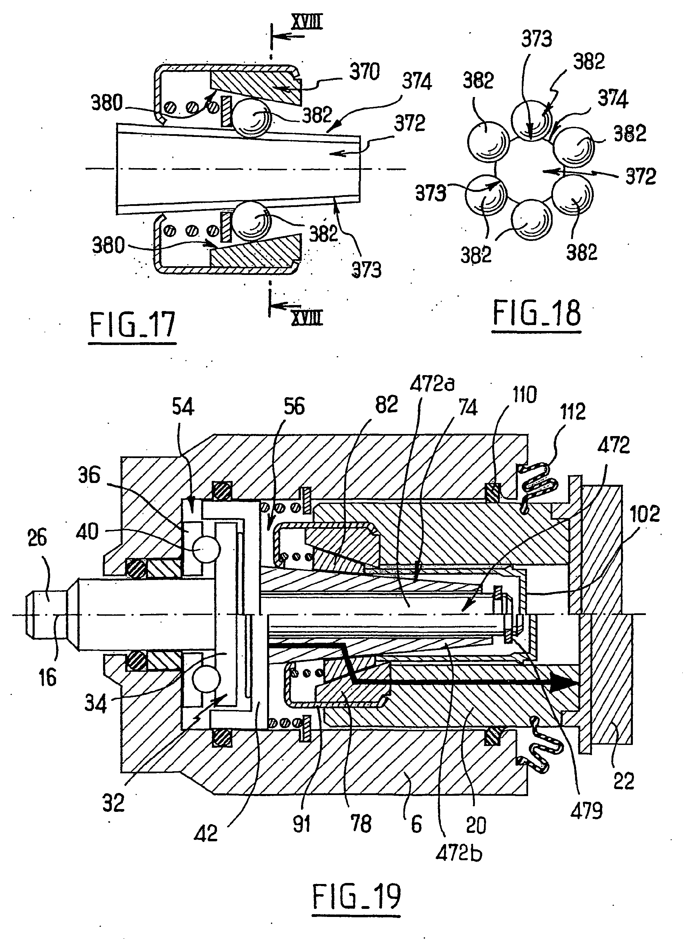

Un autre mode de réalisation du compensateur est illustré aux figures 17 et 18. Les pièces mâle 372 et femelle 370 ont, ici à nouveau, une forme générale tronconique identique à celle du premier mode. Les cales 382 sont ici au nombre de six et sont formées par des billes aptes à assurer à chaque instant un contact ponctuel avec chacune des pièces mâle et femelle. En vue de conserver un bon positionnement des billes autour de l'axe 16 au fur et à mesure de leur déplacement en fonction de l'usure des plaquettes, on pourra ménager dans la face externe de la pièce mâle 372 des gorges 373 s'étendant chacune le long de la pièce mâle de l'une à l'autre de ses extrémités et destinées à recevoir chacune l'une des billes. Au cours de leurs mouvements, les billes se déplacent le long des gorges. Des gorges analogues peuvent être prévues sur la pièce femelle 370 ou seulement sur celle-ci. Lorsque les billes sont reçues dans les gorges, le contact de la bille avec la pièce correspondante s'effectue suivant un arc de cercle. On pourra notamment prévoir que les gorges recevant les billes ont un rayon constant et une profondeur constante le long de la pièce mâle de sorte que les gorges se rapprochent les unes des autres en direction de l'extrémité distale de cette pièce. Le fonctionnement du compensateur est ici encore analogue à ceux des précédents modes.

De nombreux modes de réalisation du compensateur sont envisageables en plus de ceux ici décrits. On peut en particulier librement modifier la forme des cales et des pièces mâles et femelles. De plus, le nombre de cales peut être choisi librement pourvu qu'il soit supérieur ou égal à deux.

Il arrive parfois dans les freins à disque que les deux plaquettes 22 et 24 demeurent en contact avec le disque après une action de freinage et bien que cette action a été interrompue. Le piston demeure ainsi à l'extrémité de sa course. Dans certains freins classiques, le disque compte tenu de ses inévitables défauts de planéité repousse alors spontanément le piston sur une course réduite en vue du déblocage.

Avec le frein selon l'invention, l'actionneur 42 se trouverait rappelé en direction du disque de réaction 36 en raison de la présence du ressort 62. Il s'ensuivrait normalement que les cales 82 se déplaceraient en direction du nez de l'étrier de façon à combler tout l'espace s'étendant radialement entre les pièces mâle et femelle. Cette situation conduirait à un blocage irrémédiable du piston en contact avec le disque compte tenu de l'effet de coin produit par les cales. Les cales interdiraient donc au disque de repousser spontanément le piston sur une course réduite en vue du déblocage comme cela se produit habituellement. Cela engendrerait un freinage permanent entraînant un excès de consommation de carburant, et d'autre part un fort risque de brûlure des garnitures.

La variante illustrée à la figure 19 vise à résoudre ce problème. Dans cette variante, la pièce mâle 472 est en deux parties. Elle comporte un arbre cylindrique 472a fixé rigidement à l'actionneur 42 et un coulisseau 472b coaxial à la pièce mâle. Le coulisseau présente une face interne cylindrique au moyen de laquelle il est enfilé sur l'arbre en étant mobile à coulissement sur celui-ci. Il présente par ailleurs une face de contact tronconique externe 74 identique à celle des modes précédents. L'arbre 472a présente près de son extrémité distale libre une gorge recevant une butée d'arrêt du coulisseau telle qu'un circlip 479. La distance entre le circlip et l'actionneur est supérieure à la longueur du coulisseau qui dispose ainsi d'une courte course de coulissement délimitée d'une part par sa mise en butée sur l'actionneur et d'autre part par sa mise en butée sur le circlip. Le coulisseau 472a est mobile à coulissement par rapport à l'actionneur 42 sur une course plus courte qu'une course nominale de l'actionneur par rapport à l'étrier 6, de sorte que l'actionneur est apte à entraîner le coulisseau au cours de sa course nominale vers l'arrière après l'avancée de l'actionneur comme on le verra plus loin..

En fonctionnement normal, ce frein se comporte exactement comme ceux des précédents modes de réalisation, les deux parties de l'arbre demeurant immobiles l'une par rapport à l'autre.

En revanche, si l'actionneur et l'arbre 472a commencent à reculer tandis que le piston 20 reste en position avancée avec la plaquette 22 en friction sur le disque, le coulisseau 472b reste également en position avancée, immobile par rapport au piston. Toutefois, il apparaît un jeu axial antre l'actionneur 42 et de l'extrémité proximale du coulisseau 472b, ce jeu étant suffisant pour permettre au disque de faire reculer le piston afin de séparer les plaquettes du disque et supprimer le freinage. Le jeu résiduel est ensuite comblé par l'avancée des cales. On voit dans ces différents modes de réalisation que le compensateur d'usure des plaquettes agit sans toutefois réduire la course nominale du piston. Ce dispositif de compensation se comporte en faite comme une roue libre en version axiale c'est-à-dire qu'il autorise un mouvement relatif des pièces de l'équipage mobile lorsque l'équipage coulisse en direction de l'arbre 26 mais interdit tout mouvement relatif lorsque l'équipage se déplace dans le sens de déplacement opposé. Il a également pour avantage de constituer un système autoclave c'est-à-dire qu'il interdit tout déplacement des pièces sous l'effet des vibrations du véhicule. Il n'est pas impératif de prévoir des moyens pour assurer un bon positionnement des cales les unes par rapport aux autres autour de l'axe 16. En effet, en raison des caractéristiques du dispositif, si elles venaient à entrer en contact les unes avec les autres, elles s'écarteraient ensuite les unes des autres naturellement. Il demeure cependant envisageable de prévoir de tels moyens de positionnement.

Le joint 110 qui assure le rappel élastique du piston est essentiellement identique au joint qui assurait de surcroît dans les freins de l'art antérieur une étanchéité en isolant la chambre de liquide sous pression à l'égard de l'air atmosphérique. On a conservé ce joint dans sa structure même s'il n'est plus contigu à la chambre de liquide sous pression. Il sera facile à l'homme du métier de configurer ce joint pour obtenir le glissement du piston lorsque la course atteint un seuil prédéterminé.

La pièce mâle et éventuellement la pièce femelle pourront être fabriquées par frappe ou par décolletage. Toutefois, le mode de fabrication préféré est le roulage. Les patins pourront être réalisés en métal par frittage ou en matière plastique par moulage. Dans le choix des matériaux, on tiendra compte du fait qu'on privilégie de préférence la déformation et l'usure des cales par rapport à celles des pièces mâle et femelles. Le piston pourra être réalisé.en bakélite ou en acier.

Par ailleurs, comme on le voit, quel que soit le mode de freinage choisi, hydraulique ou mécanique, aucune pièce ne se déplace sans qu'elle participe à la transmission des sollicitations. De plus, en aval de l'actionneur 42 et à partir de celui-ci, les mêmes pièces se déplacent quel que soit le mode de freinage choisi.

Par ailleurs, la chambre de liquide sous pression s'étendant en amont de l'actionneur 42 et étant délimitée par ce dernier, un nombre réduit de pièces du frein baigne dans cette chambre. Les pièces faisant suite à l'actionneur en direction de l'aval, à savoir les pièces mâle et femelle, les cales, et le piston, s'étendent dans la chambre sèche 56 sans être au contact du liquide de freinage.

De surcroît, la chambre de liquide, s'étendant à distance du piston et des plaquettes, est davantage protégée de la chaleur générée par le contact des plaquettes avec le disque alors que la disposition du piston contiguë à la chambre de liquide pourrait conduire à échauffer cette dernière et à générer l'apparition de vapeur d'eau dans le liquide de freinage, abaissant ainsi son point d'ébullition.

On pourra réaliser chacune des pièces mâle et femelle en une ou plusieurs parties.

Le joint 30 pourra être à section rectangulaire. De façon générale, chacun des joints pourra avoir différentes formes (torique, à section rectangulaire, etc.).

La fonction de rappel du joint 110 pourra être assurée par un anneau élastique différent d'un joint d'étanchéité.

## Revendications

1. Frein à disque (2) pour véhicule comprenant :
- un étrier (4) ;
- des garnitures (22, 24) ;
- un actionneur (42) et un piston (20) ; et
- des moyens de liaison (70) aptes à compenser une usure des garnitures et interposés entre l'actionneur (42) et le piston (20) de sorte qu'un coulissement de l'actionneur dans un premier sens par rapport à l'étrier provoque un coulissement du piston, les moyens de liaison (70) étant aptes à mettre en oeuvre un effet de coin de façon à immobiliser le piston (20) par rapport à l'actionneur (42) durant le coulissement, et à rendre le piston mobile par rapport à l'actionneur durant un coulissement de l'actionneur dans un deuxième sens ;
**caractérisé en ce que** les moyens de liaison (70) comprennent
- au moins une face de contact (74; 174; 274; 374) reliée à l'actionneur (42);
- au moins une face de contact (80; 180; 280; 380) relié au piston (20) ; et **en ce que** les faces de contact (80, 74 ; 380, 374) reliées à l'actionneur et au piston ont une forme de portion de cône.

2. Frein selon la revendication 1 **caractérisé en ce que** les moyens de liaison (70) comportent également au moins deux éléments d'appui (82 ; 182 ; 282 ; 382) aptes à prendre appui chacun sur la face de contact reliée à l'actionneur et la face de contact reliée au piston.

3. Frein selon la revendication 2, **caractérisé en ce qu'**il comprend des moyens de rappel (96) des éléments d'appui dans le premier sens.

4. Frein selon la revendication 3, **caractérisé en ce qu'**il comprend un support (91) solidaire à coulissement de l'un parmi le piston et l'actionneur, de préférence le piston (20), et sur lequel prennent appui les moyens de rappel (96).

5. Frein selon l'une quelconque des revendications 1 à 4, **caractérisé en ce que** les faces de contact (180, 174 ; 280, 274) reliées à l'actionneur et au piston sont planes.

6. Frein selon l'une quelconque des revendications 1 à 5, **caractérisé en ce qu'**au moins une des faces de contact (380) reliées à l'actionneur et au piston présente une gorge (373) de réception de l'un des éléments d'appui (382).

7. Frein selon l'une quelconque des revendications 1 à 6, **caractérisé en ce qu'**au moins une des faces (74 ; 174 ; 274 ; 374) est inclinée par rapport à la direction de coulissement du piston, dans le premier sens, et au moins une autre des faces (80 ; 180 ; 280 ; 380) est inclinée dans le deuxième sens.

8. Frein selon l'une quelconque des revendications 1 à 7, **caractérisé en ce que** les éléments d'appui comprennent des billes (382).

9. Frein selon l'une quelconque des revendications 1 à 8, **caractérisé en ce que** les éléments d'appui comprennent des galets (282).

10. Frein selon l'une quelconque des revendications 1 à 9, **caractérisé en ce que** les éléments d'appui comprennent des patins (182) dont toutes les faces sont planes.

11. Frein selon l'une quelconque des revendications 1 à 10, **caractérisé en ce que** les éléments d'appui comprennent des patins (82) dont certaines faces (84, 86) ont une forme en portion de cône.

12. Frein selon l'une quelconque des revendications 1 à 11, **caractérisé en ce qu'**il comprend un organe de rappel (110) du piston (20) par rapport à l'étrier (4) dans le deuxième sens, le piston étant apte à glisser sur l'organe de rappel au-delà d'une course de valeur prédéterminée du piston par rapport à l'étrier.

13. Frein selon l'une quelconque des revendications 1 à 12, **caractérisé en ce qu'**il comprend en outre un organe de déverrouillage (102) apte à déplacer les éléments d'appui indépendamment du piston dans le deuxième sens.

14. Frein selon la revendication 13, **caractérisé en ce que** l'organe de déverrouillage (102) s'étend dans le piston (20) en étant interposé axialement entre l'actionneur (42) et les garnitures (22, 24) par référence à la direction de coulissement (16).

15. Frein selon l'une quelconque des revendications 13 ou 14, **caractérisé en ce que** l'organe de déverrouillage (102) délimite une enceinte et assure une étanchéité de l'enceinte à l'égard de l'air extérieur.

16. Frein selon l'une quelconque des revendications 13 à 15, **caractérisé en ce que** l'organe de déverrouillage comprend une lèvre d'étanchéité (105).

17. Frein selon l'une quelconque des revendications 1 à 16, **caractérisé en ce qu'**il comporte un coulisseau (472a) portant la ou chaque face de contact (74) reliée à l'actionneur et mobile à coulissement par rapport à l'actionneur (42) sur une course plus courte qu'une course nominale de l'actionneur par rapport à l'étrier (6), de sorte que l'actionneur est apte à entraîner le coulisseau au cours de sa course nominale.

18. Frein selon l'une quelconque des revendications 1 à 17, **caractérisé en ce qu'**il comprend une enceinte de fluide (54) telle qu'une pression du fluide est apte à déplacer le piston (20) en vue de freinage, l'actionneur (42) délimitant l'enceinte de sorte que le piston (20) se trouve à distance de l'enceinte.

19. Frein selon l'une quelconque des revendications précédentes **caractérisé en ce qu'**il comporte un dispositif intégré de frein de parc actionnable par un arbre d'entrée (26) lors de sa mise en rotation par une manette de frein de parc.

20. Frein selon la revendication précédente **caractérisé en ce qu'**un convertisseur de mouvement (32) est disposé entre l'arbre d'entrée (26) et l'actionneur (42) de manière à ce que le mouvement en rotation de l'arbre d'entrée provoque l'éloignement axial de l'actionneur (42) de l'arbre d'entrée.

21. Frein selon l'une quelconque des revendications 1 à 20, **caractérisé en ce que** le frein est du type coulissant.

## Patentansprüche

1. Scheibenbremse (2) für ein Kraftfahrzeug, mit:
- einem Bremssattel (4);
- Bremsbelägen (22, 24);
- einer Betätigungsvorrichtung (42) und einem Kolben (20); und
- Verbindungsmitteln (70), die einen Verschleiß der Bremsbeläge kompensieren können und zwischen der Betätigungsvorrichtung (42) und dem Kolben (20) so angeordnet sind, dass ein Gleiten der Betätigungsvorrichtung in eine erste Richtung in Bezug auf den Bremssattel ein Gleiten des Kolbens bewirkt, wobei die Verbindungsmittel (70) eine Keilwirkung ausüben können, so dass der Kolben (20) während des Gleitens in Bezug auf die Betätigungsvorrichtung (42) blockiert ist und der Kolben während eines Gleitens der Betätigungsvorrichtung in eine zweite Richtung in Bezug auf die Betätigungsvorrichtung beweglich ist;
**dadurch gekennzeichnet, dass** die Verbindungsmittel (70)
- mindestens eine mit der Betätigungsvorrichtung (42) verbundene Kontaktfläche (74; 174; 274; 374);
- mindestens eine mit dem Kolben (20) verbundene Kontaktfläche (80; 180; 280; 380) aufweisen, und dass die mit der Betätigungsvorrichtung und dem Kolben verbundenen Kontaktflächen (80, 74; 380, 374) die Form eines Kegelabschnitts besitzen.

2. Bremse nach Anspruch 1, **dadurch gekennzeichnet, dass** die Verbindungsmittel (70) auch mindestens zwei Anlageelemente (82; 182; 282; 382) aufweisen, die jeweils an der mit der Betätigungsvorrichtung verbundenen Kontaktfläche und an der mit dem Kolben verbundenen Kontaktfläche anliegen können.

3. Bremse nach Anspruch 2, **dadurch gekennzeichnet, dass** sie Mittel (96) zum Zurückstellen der Anlageelemente in die erste Richtung aufweist.

4. Bremse nach Anspruch 3, **dadurch gekennzeichnet, dass** sie einen Träger (91) aufweist, der gleitfest mit dem Kolben oder mit der Betätigungsvorrichtung, vorzugsweise mit dem Kolben (20), verbunden ist und an dem die Rückstellmittel (96) anliegen.

5. Bremse nach einem der Ansprüche 1 bis 4, **dadurch gekennzeichnet, dass** die mit der Betätigungsvorrichtung und dem Kolben verbundenen Kontaktflächen (180, 174; 280, 274) eben sind.

6. Bremse nach einem der Ansprüche 1 bis 5, **dadurch gekennzeichnet, dass** mindestens eine der mit der Betätigungsvorrichtung und dem Kolben verbundenen Kontaktflächen (380) eine Nut (373) zur Aufnahme eines der Anlageelemente (382) aufweist.

7. Bremse nach einem der Ansprüche 1 bis 6, **dadurch gekennzeichnet, dass** mindestens eine der Flächen (74; 174; 274; 374) in Bezug auf die Gleitrichtung des Kolbens in die erste Richtung geneigt ist und mindestens eine andere der Flächen (80; 180; 280; 380) in die zweite Richtung geneigt ist.

8. Bremse nach einem der Ansprüche 1 bis 7, **dadurch gekennzeichnet, dass** die Anlageelemente Kugeln (382) aufweisen.

9. Bremse nach einem der Ansprüche 1 bis 8, **dadurch gekennzeichnet, dass** die Anlageelemente Rollen (282) aufweisen.

10. Bremse nach einem der Ansprüche 1 bis 9, **dadurch gekennzeichnet, dass** die Anlageelemente Gleitschuhe (182) aufweisen, bei denen alle Flächen eben sind.

11. Bremse nach einem der Ansprüche 1 bis 10, **dadurch gekennzeichnet, dass** die Anlageelemente Gleitschuhe (82) aufweisen, bei denen einige Flächen (84, 86) die Form eines Kegelabschnitts besitzen.

12. Bremse nach einem der Ansprüche 1 bis 11, **dadurch gekennzeichnet, dass** sie ein Organ (110) zum Zurückstellen des Kolbens (20) in Bezug auf den Bremssattel (4) in die zweite Richtung aufweist, wobei der Kolben jenseits eines Wegs mit vorbestimmtem Wert des Kolbens in Bezug auf den Bremssattel auf dem Rückstellorgan gleiten kann.

13. Bremse nach einem der Ansprüche 1 bis 12, **dadurch gekennzeichnet, dass** sie ferner ein Entriegelungsorgan (102) aufweist, das die Anlageelemente unabhängig von dem Kolben in die zweite Richtung verlagern kann.

14. Bremse nach Anspruch 13, **dadurch gekennzeichnet, dass** sich das Entriegelungsorgan (102) in den Kolben (20) erstreckt, wobei es gemäß der Gleitrichtung (16) axial zwischen der Betätigungsvorrichtung (42) und den Bremsbelägen (22, 24) angeordnet ist.

15. Bremse nach Anspruch 13 oder 14, **dadurch gekennzeichnet, dass** das Entriegelungsorgan (102) einen Raum begrenzt und eine Dichtigkeit des Raums gegenüber der Außenluft gewährleistet.

16. Bremse nach einem der Ansprüche 13 bis 15, **dadurch gekennzeichnet, dass** das Entriegelungsorgan eine Dichtigkeitslippe (105) aufweist.

17. Bremse nach einem der Ansprüche 1 bis 16, **dadurch gekennzeichnet, dass** sie eine Gleitführung (472a) aufweist, welche die oder jede mit der Betätigungsvorrichtung verbundene Kontaktfläche (74) trägt und in Bezug auf die Betätigungsvorrichtung (42) über einen Weg gleitbar ist, der kürzer ist als ein Nennweg der Betätigungsvorrichtung in Bezug auf den Bremssattel (6), so dass die Betätigungsvorrichtung während ihres Nennwegs die Gleitführung antreiben kann.

18. Bremse nach einem der Ansprüche 1 bis 17, **dadurch gekennzeichnet, dass** sie einen Fluidraum (54) aufweist, so dass ein Fluiddruck den Kolben (20) für eine Bremsung verlagern kann, wobei die Betätigungsvorrichtung (42) den Raum so begrenzt, dass der Kolben (20) von dem Raum beabstandet ist.

19. Bremse nach einem der vorhergehenden Ansprüche, **dadurch gekennzeichnet, dass** sie eine integrierte Handbremsvorrichtung aufweist, die durch eine Antriebswelle (26) betätigt werden kann, wenn sie von einem Handbremshebelgriff in Drehung versetzt wird.

20. Bremse nach dem vorhergehenden Anspruch, **dadurch gekennzeichnet, dass** zwischen der Antriebswelle (26) und der Betätigungsvorrichtung (42) ein Bewegungswandler (32) so angeordnet ist, dass die Drehbewegung der Antriebswelle dazu führt, dass sich die Betätigungsvorrichtung (42) axial von der Antriebswelle entfernt.

21. Bremse nach einem der Ansprüche 1 bis 20, **dadurch gekennzeichnet, dass** die Bremse vom Typ Schwimmsattelbremse ist.

## Claims

1. Disc brake (2) for a motor vehicle, comprising:
- a caliper (4);
- linings (22, 24);
- an actuator (42) and a piston (20); and
- connecting means (70) able to compensate for lining wear and inserted between the actuator (42) and the piston (20) so that sliding of the actuator in a first direction with respect to the caliper causes the piston to slide, the connecting means (70) being able to employ a wedge effect to immobilize the piston (20) with respect to the actuator (42) during sliding, and to render the piston able to move with respect to the actuator during sliding of the actuator in a second direction;
**characterized in that** the connecting means (70) comprise
- at least one contact face (74; 174; 274; 374) connected to the actuator (42);
- at least one contact face (80; 180; 280; 380) connected to the piston (20); and **in that** the contact faces (80, 74; 380, 374) connected to the actuator and to the piston have the shape of a portion of a cone.

2. Brake according to Claim 1, **characterized in that** the connecting means (70) also comprise at least two bearing elements (82; 182; 282; 382) each able to bear against the contact face connected to the actuator and the contact face connected to the piston.

3. Brake according to Claim 2, **characterized in that** it comprises means (96) of returning the bearing elements in the first direction.

4. Brake according to Claim 3, **characterized in that** it comprises a support (91) which slides as one with either the piston or the actuator, preferably the piston (20), and against which the return means (96) bear.

5. Brake according to any one of Claims 1 to 4, **characterized in that** the contact faces (180, 174; 280, 274) connected to the actuator and to the piston are flat.

6. Brake according to any one of Claims 1 to 5, **characterized in that** at least one of the contact faces (380) connected to the actuator and to the piston has a groove (373) for accommodating one of the bearing elements (382).

7. Brake according to any one of Claims 1 to 6, **characterized in that** at least one of the faces (74; 174; 274; 374) is inclined with respect to the direction in which the piston slides, in the first direction, and at least one other of the faces (80; 180; 280; 380) is inclined in the second direction.

8. Brake according to any one of Claims 1 to 7, **characterized in that** the bearing elements comprise balls (382).

9. Brake according to any one of Claims 1 to 8, **characterized in that** the bearing elements comprise rollers (282).

10. Brake according to any one of Claims 1 to 9, **characterized in that** the bearing elements comprise pads (182) all the faces of which are flat.

11. Brake according to any one of Claims 1 to 10, **characterized in that** the bearing elements comprise pads (82) some faces (84, 86) of which have the shape of a portion of a cone.

12. Brake according to any one of Claims 1 to 11, **characterized in that** it comprises a member (110) for returning the piston (20) with respect to the caliper (4) in the second direction, the piston being able to slide on the return member beyond a travel of predetermined magnitude of the piston with respect to the caliper.

13. Brake according to any one of Claims 1 to 12, **characterized in that** it further comprises an unlocking member (102) able to move the bearing elements independently of the piston in the second direction.

14. Brake according to Claim 13, **characterized in that** the unlocking member (102) extends into the piston (20), being inserted axially between the actuator (42) and the linings (22, 24) by reference to the direction of sliding (16).

15. Brake according to either one of Claims 13 and 14, **characterized in that** the unlocking member (102) delimits a chamber and seals the chamber with respect to the external air.

16. Brake according to any one of Claims 13 to 15, **characterized in that** the unlocking member comprises a sealing lip (105).

17. Brake according to any one of Claims 1 to 16, **characterized in that** it comprises a slider (472a) bearing the or each contact face (74) connected to the actuator and able to move in sliding with respect to the actuator (42) over a travel which is shorter than a nominal travel of the actuator with respect to the caliper (6) so that the actuator is able to drive the slider during its nominal travel.

18. Brake according to any one of Claims 1 to 17, **characterized in that** it comprises a chamber of fluid (54) such that a pressure of the fluid is able to move the piston (20) with a view to applying braking, the actuator (42) delimiting the chamber in such a way that the piston (20) is remote from the chamber.

19. Brake according to any one of the preceding claims, **characterized in that** it comprises a built-in parking brake device which can be actuated by an input shaft (26) when turned by a parking brake lever handle.

20. Brake according to the preceding claim, **characterized in that** a movement converter (32) is positioned between the input shaft (26) and the actuator (42) so that the rotational movement of the input shaft causes the actuator (42) to move axially away from the input shaft.

21. Brake according to any one of Claims 1 to 20, **characterized in that** the brake is of the sliding type.
